# EUROPÄISCHE PATENTSCHRIFT

(11) **EP 1 375 999 B1**
(45) Veröffentlichungstag und Bekanntmachung des Hinweises auf die Patenterteilung: **11.04.2007**
(21) Anmeldenummer: 02014359.0
(22) Anmeldetag: 27.06.2002
(51) Int. Cl.: F16L 53/00, F01M 13/00, E03B 7/12

(54) **Heizvorrichtung zur Kurbelgehäuseentlüftung für Verbrennungskraftmaschinen und Herstellverfahren**
Heating device for a blow-by pipe of an internal combustion engine and method of construction
Appareil de chauffage pour un dispositif de ventilation d'un carter de moteur à combustion et procéde de construction

(43) Veröffentlichungstag der Anmeldung: 02.01.2004
(60) Teilanmeldung: 04000447.5
(73) Patentinhaber: DBK David + Baader GmbH, 76870 Kandel (DE)
(72) Erfinder: Beetz, Klaus Dr., 76149 Karlsruhe (DE); Gschwind, Thomas, 67098Bad Dürkheim (DE)
(74) Vertreter: Grünecker, Kinkeldey, Stockmair & Schwanhäusser Anwaltssozietät

(56) Entgegenhaltungen:
- US-A- 4 423 311
- PATENT ABSTRACTS OF JAPAN vol. 1998, no. 14, 31. Dezember 1998 (1998-12-31) & JP 10 231543 A (KAWAMOTO SEISAKUSHO:KK), 2. September 1998 (1998-09-02)
- PATENT ABSTRACTS OF JAPAN vol. 1996, no. 10, 31. Oktober 1996 (1996-10-31) & JP 08 151917 A (KUBOTA CORP), 11. Juni 1996 (1996-06-11)
- PATENT ABSTRACTS OF JAPAN vol. 018, no. 579 (M-1698), 7. November 1994 (1994-11-07) & JP 06 212940 A (SUZUKI MOTOR CORP), 2. August 1994 (1994-08-02)
- PATENT ABSTRACTS OF JAPAN vol. 1996, no. 10, 31. Oktober 1996 (1996-10-31) & JP 08 151939 A (AICHI MACH IND CO LTD), 11. Juni 1996 (1996-06-11)

## Beschreibung

Die Erfindung betrifft eine Heizvorrichtung für eine Fluidleitung, insbesondere zur Kurbelgehäuseentlüftung einer Verbrennungskraftmaschine, mit einem Heizelement und mit einer mit dem Heizelement zu einer Moduleinheit vormontierten Halteeinrichtung, durch die das Heizelement an der Fluidleitung befestigbar ist. Die Erfindung betrifft außerdem eine Fluidleitung, insbesondere zur Kurbelgehäuseentlüftung einer Verbrennungskraftmaschine, mit einem von einer Außenwand umgebenen Innenraum und mit einem sich in radialer Richtung nach außen öffnenden Schacht sowie ein Heizmodul, insbesondere zur Kurbelgehäuseentlüftung einer Verbrennungskraftmaschine, mit einer Fluidleitung, einem Heizelement und einer Halteeinrichtung, wobei das Heizelement durch die Halteeinrichtung wärmeübertragend an der Fluidleitung gehalten ist und die Fluidleitung einen sich in radialer Richtung nach außen öffnenden Schacht aufweist. Die Erfindung betrifft schließlich auch ein Verfahren zum Herstellen eines Heizmoduls, insbesondere zur Kurbelgehäuseentlüftung einer Verbrennungskraftmaschine.

Moderne Verbrennungskraftmaschinen sind mit Entlüftungen für das Kurbelgehäuse, in dem der Kurbeltrieb mit der Kurbelwelle, den Pleuelstangen und den Kolben sowie die Zylinder aufgenommen sind, versehen. Das Kurbelgehäuse ist zylinderseitig meist durch einen oder mehrere Zylinderköpfe abgedichtet, unten schließt sich üblicherweise eine Ölwanne an das Kurbelgehäuse an.

Im Betrieb der Verbrennungskraftmaschine füllt sich das Kurbelgehäuse bis zum Zylinderkopf mit Öldämpfen und Gasen, die an den Kolbenringen vorbei aus dem Verbrennungsraum der Zylinder entweichen. Diese Öldämpfe und Gase werden auch als Blowby-Gase bezeichnet. Durch die Pumpbewegung der Kolben werden die Blowby-Gase unter Druck gesetzt. Da die Öldämpfe und Gase im Kurbelgehäuse große Mengen an umweltschädlichen Kohlenwasserstoffen enthalten, sind Maßnahmen zu ergreifen, die ein Entweichen der Öldämpfe und Gase aus dem Kurbelgehäuse verhindern.

Zu diesem Zweck ist es bekannt, Kurbelgehäuseentlüftungen vorzusehen, die den Innenraum des Kurbelgehäuses mit den Luftansaugleitungen der Verbrennungskraftmaschine verbinden, so dass die Blowby-Gase aus dem Kurbelgehäuse zusammen mit der Frischluft angesaugt und verbrannt werden.

Wenn die Frischluft und die Blowby-Gase aus dem Kurbelgehäuse jedoch stark unterschiedliche Temperaturen aufweisen, kann es im Mischungsbereich zu Kondensationen und Ausfällungen kommen, die die Kurbelgehäuseentlüftung verstopfen.

Insbesondere bei Automotoren treten bei Kaltstarts im Winter hohe Temperaturdifferenzen zwischen der kalten Ansaugluft einerseits und dem sich mit dem Motorblock schnell aufwärmenden Blowby-Gasen aus dem Kurbelgehäuse andererseits auf, was in einigen Fällen sogar zur Vereisung oder Verstopfung der Mündung der Fluidleitung der Kurbelgehäuseentlüftung führen kann. Bei einer Verstopfung der Kurbelgehäuseentlüftung baut sich im Kurbelgehäuse ein hoher Druck auf, der das Schmieröl aus den Dichtungen an der Kurbelwelle, Ölwanne oder aus der Öffnung für den Ölmessstab drücken kann. Au-ßerdem müssen die Kolben gegen den hohen Druck im Kurbelgehäuse vermehrt Arbeit leisten, was zu einer Verringerung des Wirkungsgrades der Verbrennungskraftmaschine führt.

Die Kondensation der Gase und das Ausfällen von Mischungsbestandteilen bei niedrigen Außentemperaturen wird im Stand der Technik durch Heizvorrichtungen in den Leitungen zur Kurbelgehäuseentlüftung vermieden. Derartige Heizvorrichtungen sind beispielsweise aus der DE-A 2432782, der US-A5970962, der US-A-6062206 und der EP-A-1164264 bekannt.

Bei der Kurbelgehäuseentlüftung der DE-A-2432782 ist die Mündungsstelle der Entlüftungsleitung am Ansaugsystem elektrisch beheizbar. Hierzu dient eine Heizvorrichtung, die aus einem metallischen Rohrstück mit auf dessen Mantelfläche koaxial angeordnetem elektrischen Heizleiter besteht. Zum Beheizen wird eine auf einem Spulenkörper befindliche Heizdrahtwicklung verwendet. Nachteilig bei der Heizvorrichtung der DE-A-2432782 ist vor allem der große Platzbedarf, der eine Verwendung bei modernen Motoren nahezu unmöglich macht. Außerdem ist die Heizvorrichtung der DE-A-2432782 schwer zu montieren und im Schadensfall schwer auszutauschen.

Bei den weiter entwickelten Heizvorrichtungen der US-A-5970962 und der US-A-6062206 wird ein PTC (Positive Temperature Coefficient) Heizelement anstelle eines Heizdrahtes verwendet. Das Heizelement ist wärmeleitend mit einer die Mündung der Kurbelgehäuseentlüftung umgebenden Wärmesenke verbunden. Die Wärmesenke und das Heizelement sind in einem Stopfen integriert, der gleichzeitig die Mündung der Kurbelgehäuseentlüftung bildet. Zwar ist der Platzbedarf bei den Vorrichtungen der US-A-5970962 und der US-A-6062206 geringer als bei der Heizvorrichtung der DE-A-2432782, doch ist deren aufwendige Herstellung sowie deren schlechte Zugänglichkeit an der Verbrennungskraftmaschine zu Wartungszwecken nachteilig. In der EP-A-1164264 werden die PTC-Elemente mittels eines elektrisch nicht leitfähigen Silikonklebers an der Fluidleitung für die Kurbelgehäuseentlüftung aufgeklebt und nach der Montage kunststoffumspritzt. Dadurch wird eine kompakte Bauform unabhängig von der Ausgestaltung der Fluidleitung erreicht. Allerdings ist die Heizvorrichtung der EP-A-1164264 hinsichtlich ihres Aufbaus verbesserungsfähig.

Die JP-AA-10 231 543 offenbart eine Heizvorrichtung, bei der ein Gehäuse mit einem Wärmeabstrahlelement aus Metall, das durch eine Durchgangsöffnung einer Fluidleitung gesteckt wird. Ein Befestigungsabschnitt bewirkt eine wasserfeste Montage an einem Montagesitz am Öffnungsende der Durchgangsöffnung. Im Wärmeabstrahlelement ist eine Heizeinrichtung aufgenommen.

Die US-A-4,423,311 offenbart eine Vorrichtung zum Heizen einer Flüssigkeit in einer Rohrleitung. In einer seitlich und axial sich erstreckenden Durchgangsöffnung ist ein elektrisches Heizkabel durchgesteckt, das elastisch genug ist, der Kontur der Fluidleitung zu folgen, während es durch die Durchgangsöffnung geschoben wird.

In Anbetracht der Nachteile der aus dem Stand der Technik bekannten Heizvorrichtungen liegt der Erfindung daher die Aufgabe zugrunde, eine Heizvorrichtung für Fluidleitungen, insbesondere für Kurbelgehäuseentlüftungen von Verbrennungskraftmaschinen, so zu verbessern, dass sie bei einer kompakten Bauweise leichter zu montieren sind.

Diese Aufgabe wird für eine Heizvorrichtung der eingangs genannten Art dadurch gelöst, dass das Heizelement in einem sich in radialer Richtung erstreckenden Schacht die Fluidleitung berührend aufnehmbar ausgestaltet ist.

Diese Lösung ist konstruktiv einfach und erleichtert die Montage der Heizvorrichtung, da diese als eine einstückige Moduleinheit gehandhabt wird.

Zur Aufnahme des Heizelements kann die Halteeinrichtung in einer weiteren Ausgestaltung einen Sockel aufweisen, der eine zur Fluidleitung hin offene Ausnehmung aufweist, in der das Heizelement aufgenommen ist. Die Ausnehmung sichert das Heizelement gegen ein unabsichtliches Verschieben bei der Montage, so dass die Fehler anfälligkeit des Montagevorganges verringert wird. Da sich die Ausnehmung zur Fluidleitung hin öffnet, so dass das Heizelement an der Fluidleitung anliegen kann, ist ein guter Wärmeübergang vom Heizelement zur Fluidleitung möglich.

Der Wärmeübergang kann vorteilhaft auch dadurch verbessert werden, dass die Moduleinheit ein Federelement umfasst, durch das das Heizelement in Richtung der Fluidleitung gedrückt ist. Durch die Federkraft wird im eingesetzten Zustand der Moduleinheit das Heizelement an die Fluidleitung gedrückt, so dass durch die Kontaktfläche ein guter Wärmeübergang vom Heizelement zur Fluidleitung bzw. zu dem in der Fluidleitung strömenden Fluid gewährleistet ist. Der Wärmeübergang kann weiter verbessert werden, wenn die Berührungsfläche so groß wie möglich ausgestaltet ist und das Heizelement möglichst ganzflächig an der Fluidleitung anliegt.

Der Wärmeübergang vom Heizelement zu dem in der Fluidleitung strömenden Gas kann in einer weiteren vorteilhaften Ausgestaltung auch dadurch verbessert werden, dass eine Wärmesenke vorgesehen ist, die an den Innenraum der Fluidleitung grenzt. Die Wärmesenke kann dabei aus einem stark wärmeleitenden Werkstoff, wie einem Metall, insbesondere Aluminium, Kupfer oder eine Aluminium- oder Kupfer-Legierung gefertigt sein. Durch die Angrenzung an den Innenraum der Fluidleitung wird der Wärmeübergang verbessert.

Um möglichst den gesamten Strömungsquerschnitt der Fluidleitung beheizen zu können, kann die Wärmesenke als ein durchströmtes Leitungsstück ausgebildet sein, das vor zugsweise in den Schacht der Fluidleitung einlegbar ausgestaltet ist. Dabei kann der Strömungsquerschnitt in Form und Größe vorzugsweise der Form und der Größe des Strömungsquerschnitts der Fluidleitung entsprechen, so dass die Fluidleitung und das Leitungsstück ohne große Strömungsverluste durchströmt werden.

Um ein Entweichen der Blowby-Gase aus dem Kurbelgehäuse über die Heizvorrichtung zu verhindern, kann in einer weiteren vorteilhaften Ausgestaltung die Moduleinheit eine Dichtfläche aufweisen, die dichtend mit einer entsprechenden Dichtfläche der Fluidleitung in Verbindung bringbar ist. Wenn die Dichtfläche dabei in einer Weiterbildung aus einem verschweißbaren Werkstoff gefertigt ist, kann die Moduleinheit durch Verschwei-ßen, beispielsweise Reibverschweißen, insbesondere durch Ultraschall, an der Fluidleitung befestigt werden.

Alternativ kann die Moduleinheit auch wiederholt lösbar an der Fluidleitung anbringbar ausgestaltet sein, beispielsweise durch Verschrauben, Verklemmen oder Verrasten. Auch können an der Dichtfläche zusätzliche Dichtelemente, wie beispielsweise O-Ringe, angebracht sein, durch die auf eine aufwändige Endbearbeitung der Dichtfläche verzichtet werden kann.

Eine kompakte Bauweise kann insbesondere durch die Verwendung eines PTC-Heizelements (Positive Temperature Coefficient) erreicht werden.

Ein solches PTC-Heizelement kann zwischen zwei elektrisch leitenden Kontaktplatten angeordnet sein. Alternativ kann auch eine der Kontaktplatten wegfallen und durch eine elektrisch leitende Wärmesenke ersetzt sein. Außerdem kann in einer Weiterbildung eine der Kontaktplatten als Federelement ausgestaltet sein, durch das das Heizelement in Richtung der Fluidleitung gedrückt ist.

Auf aufwendige zusätzliche Leitungen zur Energieversorgung des Heizelements in der Moduleinheit kann verzichtet werden, wenn die Kontaktplatten sich in Kontaktabschnitten oder Kontaktfahnen fortsetzen und bis zu einem Steckverbinderabschnitt erstrecken. Auf diese Weise sind die Leitungen einstückig von den Kontaktplatten ausgeformt.

Die Anzahl der zu verwendenden Bauelemente und damit die Kosten zur Herstellung der Moduleinheit können verringert werden, wenn die Halteeinrichtung im wesentlichen einstückig einen Steckverbinderabschnitt ausbildet, der mit einem Steckverbinder zur Energieversorgung des Heizelements verbindbar ist. Ist die Halteeinrichtung dabei in einer weiteren vorteilhaften Ausgestaltung aus einem elektrisch isolierenden Werkstoff, beispielsweise einem Kunststoff, gefertigt, so kann auf eine aufwendige Isolierung der Versorgungsleitungen zwischen Steckverbinder und Heizelement verzichtet werden. Kostengünstig kann die Halteeinrichtung als ein Spritzgussteil gefertigt sein.

Die Energieversorgungsleitungen zwischen dem Steckverbinderabschnitt und dem Heizelement können in der Halteeinrichtung vergossen oder eingespritzt sein oder aber in vorbereitete Aufnahmeabschnitte der Halteeinrichtung eingelegt sein. Um bei eingelegten Energieversorgungsleitungen eine Abdichtung des Steckverbindungsabschnittes gegenüber dem Innenraum der Fluidleitung zu erhalten, kann der Steckverbindungsabschnitt gegenüber dem Heizelement abgedichtet sein.

Zur Aufnahme der Heizvorrichtung kann erfindungsgemäß eine speziell ausgebildete Fluidleitung vorgesehen sein, die insbesondere zur Kurbelgehäuseentlüftung einer Verbrennungskraftmaschine geeignet ist und einen von einer Außenwand umgebenen Innenraum umfasst. Die Fluidleitung kann insbesondere als ein Leitungsstück ausgebildet sein, das in bereits vorhandene Leitungen einsetzbar ausgestaltet ist. Die Fluidleitung kann einen sich radial erstreckenden Schacht aufweisen, in dem das Heizelement vorzugsweise zusammen mit der Halteeinrichtung die Fluidleitung berührend aufnehmbar ist.

Um ein als Wärmesenke ausgestaltetes Wand- oder Leitungsstück unabhängig vom Material der Fluidleitung verwenden zu können, kann die Fluidleitung einen Schacht aufweisen, der sich bis in den Innenraum der Fluidleitung erstreckt. In einen solchen Schacht kann eine Wärmesenke eingesetzt werden, die entweder einen Teil des Strömungsquerschnittes der Fluidleitung begrenzt oder aber einen Abschnitt der Fluidleitung als separates Leitungsstück bildet.

Um eine möglichst kompakte Bauweise zu erzielen, kann der Schacht in seiner äußeren Breite in etwa dem Außendurchmesser der Fluidleitung entsprechen und nicht über den Außendurchmesser der Fluidleitung ragen. Die Schachtwände können sich von einer Mittenebene der Fluidleitung im wesentlichen radiusparallel erstrecken. Diese Ausgestaltung erlaubt den Einbau der Heizvorrichtung auch in den beengten Raumverhältnissen moderner Automobilmotoren.

Ferner kann in einer vorteilhaften Ausgestaltung die Fluidleitung eine Dichtfläche aufweisen, die mit einer entsprechenden Dichtfläche der Halteeinrichtung zusammenwirkt und den Schacht gegen ein Entweichen von Blowby-Gasen aus dem Innenraum der Fluidleitung abdichtet. Dabei kann die Dichtfläche insbesondere an einem dem Schacht umgebenden Kragen ausgebildet sein.

Wenigstens die Dichtfläche oder vorzugsweise die gesamte Fluidleitung können aus einem verschweißbaren Werkstoff, beispielsweise einem Kunststoff, gefertigt sein, so dass .. die Heizvorrichtung und die Fluidleitung miteinander verschweißt, beispielsweise mit Ultraschall reibverschweißt, werden können.

Die Fluidleitung, das Heizelement und die Halteeinrichtung können auch als Heizmodul kombiniert sein, wobei das Heizelement erfindungsgemäß im Schacht aufgenommen ist und die Fluidleitung berührt.

In dem Schacht kann ferner eine an den Innenraum der Fluidleitung grenzende Wärmesenke eingesetzt sein, die mit dem Heizelement in Berührung steht, so dass ein guter Wärmeübergang erzielt wird. Insbesondere kann das Heizelement durch Federkraft an die Wärmesenke gedrückt sein.

Die Halteeinrichtung kann mit der Fluidleitung stoffschlüssig durch beispielsweise Kleben oder Verschweißen verbunden sein. Insbesondere bei der Verwendung von Kunststoffen sowohl fluidleitungsseitig als auch halteeinrichtungsseitig kann die Verbindung zwischen der Halteeinrichtung und der Fluidleitung durch Ultraschallverschweißen erzeugt werden.

Im folgenden werden der Aufbau und die Funktion der Erfindung anhand einer Ausführungsform mit Bezug auf die Zeichnungen beispielhaft erläutert.

Es zeigen:
- Fig. 1: ein erfindungsgemäßes Heizmodul in einer Explosionsdarstellung;
- Fig. 2.: das Heizmodul der Fig. 1 im zusammengebauten Zustand in einer Seitenansicht;
- Fig. 3.: das Heizmodul der Fig. 2 in einer Draufsicht entlang des Pfeiles III der Fig. 2;
- Fig. 4: das Heizmodul der Fig. 2 in einem Schnitt entlang der Ebene IV-IV der Fig. 2;
- Fig. 5: das Heizmodul der Fig. 2 in einem Schnitt entlang der Ebene V-V der Fig. 2;
- Fig. 6: das Heizmodul der Fig. 2 in einem Schnitt entlang der Ebene VI-VI der Fig. 4.

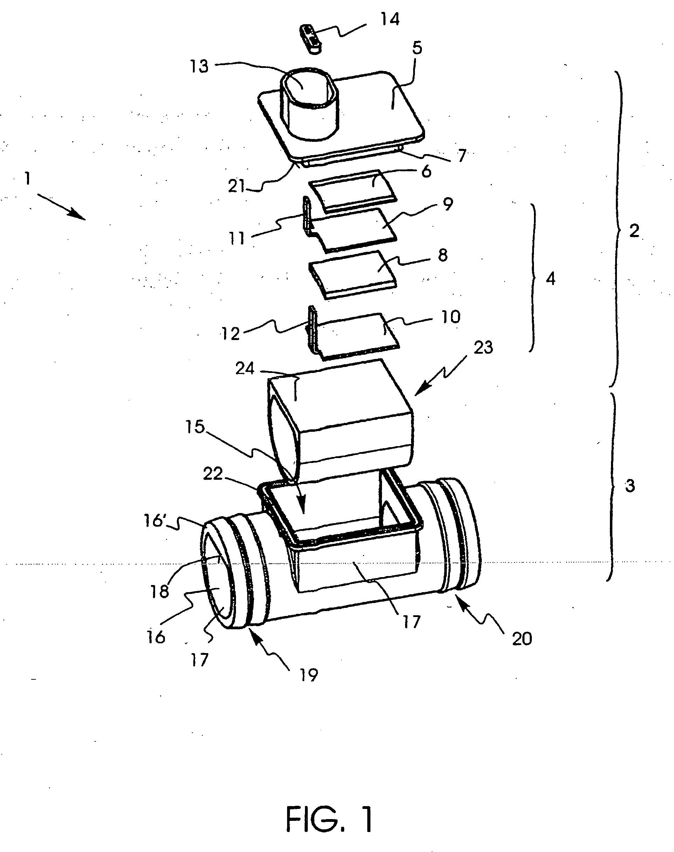

Fig. 1 zeigt ein erfindungsgemäßes Heizmodul 1 in einer Ansicht, in der in einer Montagerichtung M die Bauelemente des Heizmoduls 1 explosionsartig übereinander gezeichnet sind.

Das Heizmodul 1 weist eine Heizvorrichtung 2 sowie eine im wesentlichen rohrförmige Fluidleitung 3 auf. Die Montagerichtung M verläuft im wesentlichen radial zur Fluidleitung 3.

Die Heizvorrichtung 2 umfasst ein Heizelement 4 und eine Halteeinrichtung 5. Durch die Halteeinrichtung 5 ist das Heizelement 4 an der Fluidleitung 3 befestigbar. Ferner kann, wie beim Ausführungsbeispiel der Fig. 1, die Heizvorrichtung 2 ein Federelement 6 umfassen, durch das das Heizelement 4 in Richtung der Fluidleitung 3 gedrückt wird. Das Federelement 6 kann zwischen dem Heizelement 4 und der Halteeinrichtung 5 und in einem Sockel 7 der Halteeinrichtung aufgenommen sein.

Das Heizelement 4 umfasst ein PTC-Heizelement 8, das zwischen zwei Kontaktplatten 9, 10 angeordnet ist. Die Kontaktplatten 9, 10 sind elektrisch leitend und setzen sich jeweils in einen Kontaktabschnitt 11, 12 fort, der als eine rechtwinklig gegenüber der Platte abgewinkelte Kontaktfahne ausgestaltet ist.

Die Kontaktfahnen 11, 12 sind so ausgestaltet, dass sie sich bis zu einem Steckverbinderabschnitt 13 der Halteeinrichtung 5 erstrecken können, wenn das Heizelement 4 in der Halteeinrichtung 5 eingelegt ist. Der Steckverbinderabschnitt 13 kann, wie in der Fig. 1 gezeigt ist, einstückig an der Halteeinrichtung 5 ausgebildet sein. Hierzu ist die Halteeinrichtung 5 aus einem Kunststoff durch Spritzgießen hergestellt.

Um die Kontaktfahnen 11, 12 im Steckverbinderabschnitt 13 kann ein Dichtelement 14 gelegt sein.

Die Fluidleitung 3 weist einen sich radial öffnenden Schacht 15 auf, in dem die Halteeinrichtung 5 und das Heizelement 4 aufnehmbar sind. Der Schacht 15 erstreckt sich bis zu einem Innenraum 16 der Fluidleitung 3, durch den das Fluid geleitet ist und der durch eine Außenwand 16' begrenzt ist. Der Schacht 15 weist einen Kragen 17 bildende Schachtwände auf, die sich radiusparallel vom Durchmesser der Fluidleitung 3 weg erstrecken.

In Öffnungsrichtung des Schachtes 15 ist der Innenraum 16 der Fluidleitung 3 von einem ebenen Wandabschnitt 18 begrenzt.

An den beiden in Längs- bzw. Durchstömungsrichtung gelegenen Enden der Fluidleitung sind Verbindungsabschnitte 19, 20 vorgesehen, mit denen die Fluidleitung 3 an einer Verbrennungskraftmaschine (nicht gezeigt) befestigt werden kann.

Die Heizvorrichtung 2 und das Heizelement 4 können als eine Moduleinheit vormontiert sein, die in den Schacht 15 einsetzbar ausgestaltet ist.

Die Halteeinrichtung 5 weist eine Dichtfläche 21 auf, die mit einer entsprechenden fluidleitungsseitigen Dichtfläche 22 am Kragen 17 zusammenwirkt, so dass durch den Schacht 15 bei montierter Heizvorrichtung 2 kein Fluid aus dem Innenraum 16 entweichen kann.

Eine als ein Leitungsstück 23 ausgebildete Wärmesenke, die sowohl Teil der Fluidleitung 3 als auch Teil der Heizvorrichtung 2 sein kann, ist so ausgestaltet, dass sie in den Schacht 15 einlegbar ist und den Strömungsquerschnitt der Fluidleitung 3 im Bereich des Schachtes 15 umgibt. Die Wärmesenke weist an ihrem dem Heizelement 4 zugewandten Abschnitt eine im wesentlichen plane Fläche 24 auf. Die Wärmesenke 23 ist aus einem wärmeleitenden Werkstoff, wie beispielsweise Aluminium, Kupfer oder Aluminium- oder Kupferlegierungen gefertigt.

Anstelle der in Fig. 1 dargestellten, als Leitungsstück ausgebildeten Wärmesenke 23 kann die Wärmesenke 23 auch lediglich einen Wandabschnitt bilden, der an den Innenraum 16 der Fluidleitung 3 grenzt. Hierzu kann die Wärmesenke beispielsweise plattenförmig ausgestaltet sein und lediglich die planen Flächen 24 und 18 ausbilden.

Die Wärmesenke 23 kann mit der Heizvorrichtung 2 form- oder stoffschlüssig zu einer Moduleinheit verbunden sein, oder aber vor dem Anbringen des Heizelements 4 in die Fluidleitung 3 eingesetzt sein.

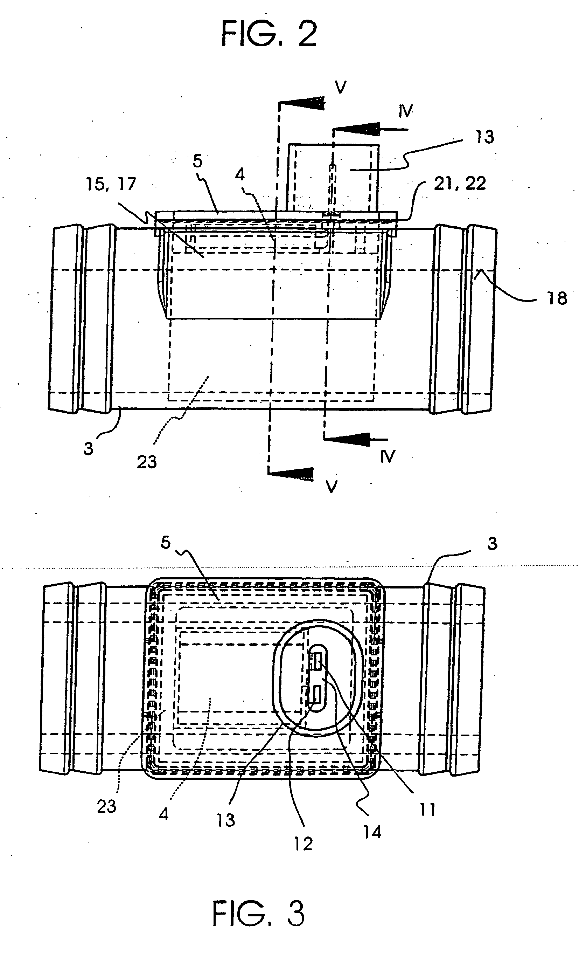

In Fig. 2 ist eine Seitenansicht des Heizmoduls 1 im zusammengesetzten Zustand, das heißt mit an der Fluidleitung 3 befestigter Halteeinrichtung 5, mit in den Schacht 15 eingelegtem Heizelement 4 und mit in den Schacht 15 eingelegter Wärmesenke 23. Die nicht sichtbaren Elemente sind in der Seitenansicht der Fig. 2 durch gestrichelte Linien dargestellt.

In der Fig. 2 ist zu erkennen, dass sich der Schacht 15 in radialer Richtung nur in etwa bis zum Außendurchmesser der rohrförmigen Fluidleitung 3 erstreckt und nicht über die Kontur der Fluidleitung ragt. Allein der Steckverbindungsabschnitt 13 erstreckt sich in radialer Richtung weg von der Fluidleitung 3, so dass das Heizmodul auch bei beengten Einbauverhältnissen verwendet werden kann. Der Steckverbindungsabschnitt 13 bleibt aber dennoch leicht zugänglich

Die Halteeinrichtung 5 und die Fluidleitung 3 liegen im Bereich der Dichtflächen 21, 22 dichtend aufeinander und sind entlang der Dichtflächen 21, 22 miteinander verschweißt, vorzugsweise durch Ultraschall.

In Fig. 3 ist zu erkennen, dass die Breite des Schachtes quer zur Längserstreckung der Fluidleitung 3 in etwa dem Außendurchmesser der Fluidleitung 3 entspricht, so dass auch in dieser Richtung der Schacht 15 nicht über die Kontur der Fluidleitung ragt. Der Kragen 17 des Schachtes 15 erstreckt sich dabei radiusparallel vom Durchmesser der Fluidleitung 3 nach oben.

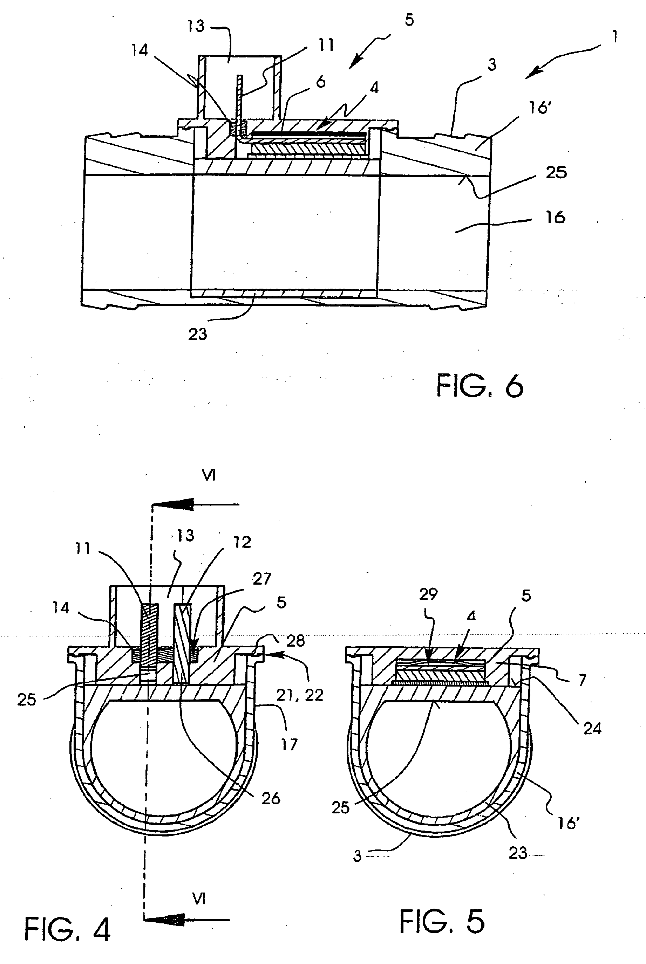

In den Fig. 4 und 5 sind Radialschnitte in den Ebenen IV-IV (Fig. 4) und V-V (Fig. 5) jeweils der Fig. 2 gezeigt. Die Ebene IV-IV liegt dabei im Bereich der Kontaktfahnen 11, 12 der Kontaktplatten 9, 10.
Wie in Fig. 4 zu erkennen ist, erstrecken sich die Kontaktfahnen 11, 12 durch jeweils eine Öffnung 25, 26 im Sockel 7 der Halteeinrichtung 4 zum Steckverbindungsabschnitt 13. Die Öffnungen 25, 26 enden an der dem Steckverbindungsabschnitt 13 zugewandeten Ende in einer Ausnehmung 27, die sich quer über beide Öffnungen 25, 26 erstreckt. In die Ausnehmung 27 ist das Dichtelement 14 eingelegt, so dass die Öffnungen 25, 26 abgedichtet sind.

Wie in Fig. 4 weiter zu erkennen ist, sind die Kontaktfahnen 11, 12 in den Öffnungen 25, 26 nicht isoliert, da die Halteeinrichtung 4 wenigstens in dem Bereich, in dem die elektrischen Leitungen zwischen dem Heizelement 4 und dem Steckverbindungsabschnitt 13 verlaufen, aus einem elektrisch isolierenden Material gefertigt ist. Im Steckverbinderabschnitt 13 liegen die Kontaktfahnen 11, 12 frei und können durch einen Stecker zur Versorgung des Heizelements 4 mit elektrischer Energie kontaktiert werden.

Die Dichtflächen 21, 22 können mit ineinandergreifenden Führungselementen 28 versehen sein, durch die die Position der Halteeinrichtung 4 am Kragen 17 weitgehend unverschieblich festgelegt wird, so dass die Halteeinrichtung 4 bei der Montage nicht verrutschen kann. Gleichzeitig dienen die Führungselemente 28 bei einer Ultraschallverschweißung zu einer Konzentration der Körperschwingungen, so dass eine sichere Verschweißung in diesem Bereich möglich ist.

Der Schnitt entlang der Ebene V-V der Fig. 5 geht durch das Heizelement 4. Wie in Fig. 5 zu erkennen ist, ist das Heizelement 4 in einer Ausnehmung 29 im Sockel 7 der Halteeinrichtung 5 aufgenommen.

Die dem Innenraum 16 der Fluidleitung 3 zugewandte Kontaktplatte 10 des Heizelements 4 liegt flächig am planen Abschnitt 24 der in die Fluidleitung 3 eingelegten Wärmesenke 23 auf, die von der Außenwand 16' der Fluidleitung umgeben ist. Durch das Federelement 6 wird eine möglichst vollflächige Berührung erzeugt.

Alternativ zu der gezeigten Ausführungsform kann die vom Innenraum 16 der Fluidleitung 3 abgewandte Kontaktplatte 9 gleichzeitig als Federelement ausgebildet sein Bei einer elektrisch leitenden Wärmesenke 23 kann außerdem auf die Kontaktplatte 10 verzichtet werden und eine elektrische Leitung über die Wärmesenke 23 hergestellt werden.

Durch die dem Heizelement zugewandte plane Fläche 24 der Wärmesenke und durch die plane Begrenzung 25 des Innenraums 16 an der dem Heizelement zugewandten Seite wird eine gute Wärmeübertragung vom Heizelement 4 in den Innenraum 16 der Fluidleitung 3 gewährleistet.

In Fig. 6 ist ein Schnitt entlang der Ebene VI-VI der Fig. 4, die außermittig durch die Kontaktfahne 11 verläuft, gezeigt.

In der Fig. 6 ist zu erkennen, dass sich der Innenraum 16 der Fluidleitung 3 im Bereich der Wärmesenke 23 im wesentlichen stoßfrei fortsetzt, so dass nur geringe oder gar keine Strömungsverluste beim Durchströmen eines Fluids durch die Fluidleitung 3 entstehen und sich auch keine Ablagerungen in Rezirkulationsgebieten bilden können.

Die in den Fig. 1 bis 6 dargestellte Ausführungsform ist besonders geeignet zur Beheizung Blowby-Gasen, die in Leitungen für die Kurbelgehäuseentlüftung von Verbrennungskraftmaschinen, insbesondere bei Automobilen, eingesetzt werden.

## Patentansprüche

1. Heizvorrichtung (2) für eine Fluidleitung (3), insbesondere zur Kurbelgehäuseentlüftung einer Verbrennungskraftmaschine, mit einem Heizelement (4) und mit einer mit dem Heizelement (4) zu einer Moduleinheit vormontierten Halteeinrichtung (5), durch die das Heizelement (4) an der Fluidleitung (3) befestigbar ist, **dadurch gekennzeichnet, dass** das Heizelement (4) in einem sich in radialer Richtung erstreckenden Schacht (15) die Fluidleitung (3) berührend aufnehmbar ausgestaltet ist.

2. Heizvorrichtung (2) nach Anspruch 1, **dadurch gekennzeichnet, dass** die Halteeinrichtung (5) einen Sockel (7) aufweist, der eine zur Fluidleitung (3) hin offene Ausnehmung (27) aufweist, in der das Heizelement (4) aufgenommen ist.

3. Heizvorrichtung (2) nach Anspruch 1 oder 2, **dadurch gekennzeichnet, dass** die Moduleinheit ein Federelement (6) umfasst, durch das das Heizelement (4) in Richtung der Fluidleitung (3) mit einer Federkraft beaufschlagbar ist.

4. Heizvorrichtung (2) nach einem der oben genannten Ansprüche, **dadurch gekennzeichnet, dass** die Halteeinrichtung (5) eine Dichtfläche (21) aufweist, die dichtend mit der Fluidleitung (3) in Verbindung bringbar ist.

5. Heizvorrichtung (2) nach Anspruch 4, **dadurch gekennzeichnet, dass** die Dichtfläche (21) aus einem verschweißbaren Werkstoff gefertigt ist.

6. Heizvorrichtung (2) nach einem der oben genannten Ansprüche, **dadurch gekennzeichnet, dass** die Heizvorrichtung (2) eine Wärmesenke (23) umfasst, die an den Innenraum (16) der Fluidleitung (3) grenzt.

7. Heizvorrichtung (2) nach Anspruch 6, **dadurch gekennzeichnet, dass** die Wärmesenke (23) als ein durchströmbares Leitungsstück ausgebildet ist.

8. Heizvorrichtung (2) nach Anspruch 6 oder 7, **dadurch gekennzeichnet, dass** die Wärmesenke (23) in den Schacht (15) der Fluidleitung (3) einlegbar ausgestaltet ist.

9. Heizvorrichtung (2) nach einem der oben genannten Ansprüche, **dadurch gekennzeichnet, dass** das Heizelement (4) ein PTC-Heizelement (8) umfasst.

10. Heizvorrichtung (2) nach Anspruch 9, **dadurch gekennzeichnet, dass** wenigstens eine Kontaktplatte (9, 10) vorgesehen ist, die am PTC-Heizelement (8) anliegt und sich in einem Kontaktabschnitt (11, 12) bis zu einem Steckverbinderabschnitt (13) einteilig fortsetzt.

11. Heizvorrichtung (2) nach Anspruch 10, **dadurch gekennzeichnet, dass** wenigstens eine der Kontaktplatten (9, 10) als Federelement ausgestaltet ist.

12. Heizvorrichtung (2) nach Anspruch 11, **dadurch gekennzeichnet, dass** die als Federelement ausgestaltete Kontaktplatte (9) zwischen dem PTC-Heizelement (8) und der Halteeinrichtung (5) angeordnet ist.

13. Heizvorrichtung (2) nach einem der oben genannten Ansprüche, **dadurch gekennzeichnet, dass** die Halteeinrichtung (5) im wesentlichen einstückig einen Steckverbinderabschnitt (13) ausbildet, der mit einem Steckverbinder zur Energieversorgung des Heizelements (4) verbindbar ist.

14. Heizvorrichtung (2) nach Anspruch 13, **dadurch gekennzeichnet, dass** der Steckverbindungsabschnitt (13) gegenüber dem Heizelement (4) abgedichtet ist.

15. Bausatz, umfassend eine Heizvorrichtung (2) und eine Fluidleitung (3), **dadurch gekennzeichnet, dass** die Heizvorrichtung (2) nach einem der oben genannten Ansprüche ausgestaltet ist.

16. Fluidleitung (3), insbesondere zur Kurbelgehäuseentlüftung einer Verbrennungskraftmaschine, mit einem von einer Außenwand umgebenen Innenraum (16) und mit einem sich in radialer Richtung nach außen öffnenden Schacht (15), **dadurch gekennzeichnet, dass** in dem Schacht (15) eine Heizvorrichtung (2) nach einem der Ansprüche 1 bis 12 die Fluidleitung (3) berührend aufnehmbar ist.

17. Fluidleitung (3) nach Anspruch 16, **dadurch gekennzeichnet, dass** der Schacht (15) von einer Dichtfläche (22) umgeben ist.

18. Fluidleitung (3) nach Anspruch 16 oder 17 **dadurch gekennzeichnet, dass** die Dichtfläche (22) an einem dem Schacht (15) umgebenen Kragen (17) ausgebildet ist.

19. Fluidleitung (3) nach einem der Ansprüche 16 bis 18, **dadurch gekennzeichnet, dass** die Fluidleitung (3) wenigstens im Bereich der Dichtfläche (22) aus einem verschweißbaren Werkstoff gefertigt ist.

20. Fluidleitung (3) nach einem der Ansprüche 16 bis 19, **dadurch gekennzeichnet, dass** die Fluidleitung (3) aus einem Kunststoff gefertigt ist.

21. Fluidleitung (3) nach einem der Ansprüche 16 bis 20, **dadurch gekennzeichnet, dass** die Fluidleitung (3) eine im Bereich des Schachtes (15) angeordnete Wärmesenke (23) umfasst, die an den Innenraum (16) der Fluidleitung (3) grenzt.

22. Fluidleitung (3) nach Anspruch 21, **dadurch gekennzeichnet, dass** die Wärmesenke (23) einen den Innenraum (16) der Fluidleitung (3) umgebenen Abschnitt der Fluidleitung (3) ausbildet.

23. Fluidleitung (3) nach Anspruch 21 oder 22, **dadurch gekennzeichnet, dass** die Wärmesenke (23) in den Schacht (15) einlegbar ausgestaltet ist.

24. Fluidleitung (3) nach einem der Ansprüche 16 bis 23, **dadurch gekennzeichnet, dass** der Innenraum (16) der Fluidleitung (3) in Öffnungsrichtung des Schachtes (15) wenigstens abschnittsweise eine im wesentlichen plane Begrenzungsfläche (18) aufweist.

25. Bausatz, umfassend eine Heizvorrichtung (2) und eine Fluidleitung (3), **dadurch gekennzeichnet, dass** die Fluidleitung (3) nach einem der Ansprüche 14 bis 22 ausgestaltet ist.

26. Heizmodul (1), insbesondere zur Kurbelgehäuseentlüftung einer Verbrennungskraftmaschine, mit einer Fluidleitung (3), einem Heizelement (4) und einer Halteeinrichtung (5), wobei das Heizelement (4) durch die Halteeinrichtung (5) wärmeübertragend an der Fluidleitung (3) gehalten ist und die Fluidleitung (3) einen sich in radialer Richtung nach außen öffnenden Schacht(15) aufweist, **dadurch gekennzeichnet, dass** eine Heizvorrichtung nach einem der Ansprüche 1 bis 15 in eine Fluidleitung nach einem der Ansprüche 16 bis 25 eingesetzt wird.

27. Heizmodul (1) nach Anspruch 26, **dadurch gekennzeichnet, dass** eine Wärmesenke (23) im Bereich des Schachtes (15) vorgesehen ist, die an den Innenraum (16) der Fluidleitung (3) grenzt.

28. Heizmodul (1) nach Anspruch 27, **dadurch gekennzeichnet, dass** die Wärmesenke (23) als ein in den Schacht (15) eingelegtes Leitungsstück ausgebildet ist.

29. Heizmodul (1) nach einem der Ansprüche 26 bis 28, **dadurch gekennzeichnet, dass** die Halteeinrichtung (4) mit der Fluidleitung (3) stoffschlüssig abdichtend verbunden ist.

30. Heizmodul (1) nach Anspruch 29, **dadurch gekennzeichnet, dass** die Halteeinrichtung (5) mit der Fluidleitung (3) verschweißt ist.

31. Verfahren zum Herstellen eines Heizmoduls (1), insbesondere zur Kurbelgehäuseentlüftung einer Verbrennungskraftmaschine, umfassend folgende Schritte:
- Einsetzen des Heizelements in einen sich radial nach außen öffnenden Schacht;
- Anlegen des Heizelements (4) an die Fluidleitung (3), so dass sich beide berühren;
- Anbringen einer Halteeinrichtung an den Schacht zur Befestigung des Heizelements.

32. Verfahren nach Anspruch 31, umfassend folgenden Verfahrensschritt:
- Vormontieren des Heizelements und der Halteeinrichtung zu einer Moduleinheit.

33. Verfahren nach Anspruch 31 oder 32, umfassend folgenden Verfahrensschritt:
- Verschweißen der Halteeinrichtung und der Fluidleitung.

## Claims

1. Heating device (2) for a fluid line (3), in particular for the blowby gas duct of an internal combustion engine, having a heating element (4) and a holding device (5) which is pre-assembled with the heating element (4) to form a modular unit and by means of which the heating element (4) is fixable to the fluid line (3), **characterised in that** the heating element (4) is formed so as to be receivable in a shaft (15) extending in the radial direction so as to touch the fluid line (3).

2. Heating device (2) according to claim 1, **characterised in that** the holding device (5) has a base (7) having a recess (27) which is open to the fluid line (3) and in which the heating element (4) is received.

3. Heating device (2) according to claim 1 or 2, **characterised in that** the modular unit comprises a spring element (6), by means of which the heating element (4) may be acted on with spring force in the direction of the fluid line (3).

4. Heating device (2) according to one of the preceding claims, **characterised in that** the holding device (5) has a sealing face (21), which may be brought into sealing-tight contact with the fluid line (3).

5. Heating device (2) according to claim 4, **characterised in that** the sealing face (21) is manufactured from a weldable material.

6. Heating device (2) according to one of the preceding claims, **characterised in that** the heating device (2) comprises a heat sink (23), which adjoins the interior (16) of the fluid line (3).

7. Heating device (2) according to claim 6, **characterised in that** the heat sink (23) is formed as a duct member through which a fluid may pass.

8. Heating device (2) according to claim 6 or 7, **characterised in that** the heat sink (23) is formed so as to be insertable in the shaft (15) of the fluid line (3).

9. Heating device (2) according to one of the preceding claims, **characterised in that** the heating element (4) comprises a PTC heating element (8).

10. Heating device (2) according to claim 9, **characterised in that** at least one contact plate (9, 10) is provided, which abuts the PTC heating element (8) and is continued in a contact section (11, 12) up to a plug-and-socket connector section (13).

11. Heating device (2) according to claim 10, **characterised in that** at least one of the contact plates (9, 10) is formed as a spring element.

12. Heating device (2) according to claim 11, **characterised in that** the contact plate (9) formed as a spring element is disposed between the PTC heating element (8) and the holding device (5).

13. Heating device (2) according to one of the preceding claims, **characterised in that** the holding device (5) forms substantially integrally a plug-and-socket connector section (13), which may be connected to a plug-and-socket connector for the power supply to the heating element (4).

14. Heating device (2) according to claim 13, **characterised in that** the plug-and-socket connector section (13) is sealed with respect to the heating element (4).

15. Kit, comprising a heating device (2) and a fluid line (3), **characterised in that** the heating device (2) is formed according to one of the preceding claims.

16. Fluid line (3), in particular for the blowby gas duct of an internal combustion engine, having an interior (16) surrounded by an outer wall and a shaft (15) opening to the outside in the radial direction, **characterised in that** a heating device (2) according to one of claims 1 to 12 may be received in the shaft (15) so as to touch the fluid line (3).

17. Fluid line (3) according to claim 16, **characterised in that** the shaft (15) is surrounded by a sealing face (22).

18. Fluid line (3) according to claim 16 or 17, **characterised in that** the sealing face (22) is formed on a collar (17) surrounding the shaft (15).

19. Fluid line (3) according to one of claims 16 to 18, **characterised in that** the fluid line (3) is manufactured from a weldable material at least in the region of the sealing face (22).

20. Fluid line (3) according to one of claims 16 to 19, **characterised in that** the fluid line (3) is manufactured from a plastics material.

21. Fluid line (3) according to one of claims 16 to 20, **characterised in that** the fluid line (3) comprises a heat sink (23) which is disposed in the region of the shaft (15) and which adjoins the interior (16) of the fluid line (3).

22. Fluid line (3) according to claim 21, **characterised in that** the heat sink (23) forms a section of the fluid line (3) surrounding the interior (16) of the fluid line (3).

23. Fluid line (3) according to claim 21 or 22, **characterised in that** the heat sink (23) is formed to be insertable in the shaft (15).

24. Fluid line (3) according to one of claims 16 to 23, **characterised in that** the interior (16) of the fluid line (3) has at least in sections in the opening direction of the shaft (15) a substantially plane limiting face (18).

25. Kit, comprising a heating device (2) and a fluid line (3), **characterised in that** the fluid line (3) is formed according to one of claims 14 to 22.

26. Heating unit (1), in particular for the blowby gas duct of an internal combustion engine, having a fluid line (3), a heating element (4) and a holding device (5), the heating element (4) being held by the holding device (5) so as to transmit heat to the fluid line (3) and the fluid line (3) having a shaft (15) which is open to the outside in the radial direction, **characterised in that** a heating device according to one of claims 1 to 15 is inserted into a fluid line according to one of claims 16 to 25.

27. Heating unit (1) according to claim 26, **characterised in that** a heat sink (23) is provided in the region of the shaft (15), which borders the interior (16) of the fluid line (3).

28. Heating unit (1) according to claim 27, **characterised in that** the heat sink (23) is formed as a duct member inserted into the shaft (15).

29. Heating unit (1) according to one of claims 26 to 28, **characterised in that** the holding device (4) is connected in a sealing-tight manner with material locking with the fluid line (3).

30. Heating unit (1) according to claim 29, **characterised in that** the holding device (5) is welded to the fluid line (3).

31. Method of manufacturing a heating unit (1), in particular for the blowby gas duct of an internal combustion engine, comprising the following steps:
- insertion of the heating element into a shaft opening radially outward;
- application of the heating element (4) to the fluid line (3) so that the two are in mutual contact;
- mounting of a holding device on the shaft in order to fix the heating element.

32. Method according to claim 31, comprising the following step:
- pre-assembly of the heating element and the holding device to form a modular unit.

33. Method according to claim 31 or 32, comprising the following step:
- welding of the holding device and the fluid line.

## Revendications

1. Dispositif de chauffage (2) pour une conduite de fluide (3), en particulier pour le dégazage du carter d'un moteur à combustion interne, comprenant un élément de chauffage (4) et un dispositif de fixation (5) monté à l'avance avec l'élément de chauffage (4) en une unité modulaire, par lequel l'élément de chauffage (4) peut être attaché à la conduite de fluide (3), **caractérisé en ce que** l'élément de chauffage (4) est disposé de manière à pouvoir être logé dans un puits (15) s'étendant en direction radiale en touchant la conduite de fluide (3).

2. Dispositif de chauffage (2) selon la revendication 1, **caractérisé en ce que** le dispositif de fixation (5) comprend une base (2) qui présente un évidement (27) ouvert vers la conduite de fluide (3), dans lequel l'élément de chauffage (4) est logé.

3. Dispositif de chauffage (2) selon la revendication 1 ou 2, **caractérisé en ce que** l'unité modulaire comprend un élément de ressort, par lequel l'élément de chauffage (4) est rappelé en direction de la conduite de fluide (3) avec une force élastique.

4. Dispositif de chauffage (2) selon l'une quelconque des revendications précédentes, **caractérisé en que** le dispositif de fixation comprend une surface d'étanchéité (21) qui peut être mise en liaison de façon étanche avec la conduite de fluide (3).

5. Dispositif de chauffage (2) selon la revendication 4, **caractérisé en ce que** la surface d'étanchéité (21) est faite en une matière soudable.

6. Dispositif de chauffage (2) selon l'une quelconque des revendications précédentes, **caractérisé en ce que** le dispositif de chauffage (2) comprend un dissipateur thermique (23) qui est adjacent à l'espace intérieur (16) de la conduite de fluide (3).

7. Dispositif de chauffage selon la revendication 6, **caractérisé en ce que** le dissipateur thermique (23) est agencé comme une pièce conductrice traversante.

8. Dispositif de chauffage selon la revendication 6 ou 7, **caractérisé en ce que** le dissipateur thermique (23) est agencé de façon à pouvoir être logé dans le puits (15) de la conduite de fluide (3) .

9. Dispositif de chauffage (2) selon l'une quelconque des revendications précédentes, **caractérisé en ce que** l'élément de chauffage (4) comprend un élément de chauffage à coefficient positif de température (8).

10. Dispositif de chauffage (2) selon la revendication 9, **caractérisé en ce qu'**on prévoit au moins une plaque de contact (9, 10) qui est placée contre l'élément de chauffage à coefficient positif de température (8) et se poursuit d'un seul tenant dans un segment de contact (11, 12) jusqu'à un segment de connecteur à fiches (13).

11. Dispositif de chauffage (2) selon la revendication 10, **caractérisé en ce qu'**au moins l'une des plaques de contact (9, 10) est formée comme élément à ressort.

12. Dispositif de chauffage (2) selon la revendication 11, **caractérisé en ce que** la plaque de contact (9) formée comme élément à ressort est disposée entre l'élément de chauffage à coefficient positif de température (8) et le dispositif de fixation (5).

13. Dispositif de chauffage (2) selon l'une quelconque des revendications précédentes, **caractérisé en ce que** l'installation de maintien (5) forme un segment de connecteur à fiches (13) sensiblement d'un seul tenant qui peut être raccordé à un connecteur à fiches pour l'alimentation en énergie de l'élément de chauffage (4).

14. Dispositif de chauffage (2) selon la revendication 13, **caractérisé en ce que** le segment de connecteur à fiches (13) est rendu étanche par rapport à l'élément de chauffage (4).

15. Ensemble, comprenant un dispositif de chauffage (2) et une conduite de fluide (3), **caractérisé en ce que** le dispositif de chauffage (2) est formé selon l'une quelconque des revendications précédentes.

16. Conduite de fluide (3), notamment pour le dégazage du carter de vilebrequin d'un moteur à combustion interne, avec un espace intérieur (16) entouré par une paroi extérieure et un puits (15) s'ouvrant vers l'extérieur en direction radiale, **caractérisée en ce qu'**un dispositif de chauffage (2) selon l'une quelconque des revendications 1 à 12 est logé dans le puits (15) de façon à toucher la conduite de fluide (3).

17. Conduite de fluide (3) selon la revendication 16, **caractérisée en ce que** le puits (15) est entouré par une surface d'étanchéité (22).

18. Conduite de fluide (3) selon la revendication 16 ou 17, **caractérisée en ce que** la surface d'étanchéité (22) est formée sur le collet (17) entourant le puits (1).

19. Conduite de fluide selon l'une quelconque des revendications 16 à 18, **caractérisée en ce que** la conduite de fluide (3) est faite au moins dans la région de la surface d'étanchéité (22) en une matière soudable.

20. Conduite de fluide (3) selon l'une quelconque des revendications 16 à 19, **caractérisée en ce que** la conduite de fluide (3) est fabriquée à partir d'une matière plastique.

21. Conduite de fluide selon l'une quelconque des revendications 16 à 20, **caractérisée en ce que** la conduite de fluide (3) comprend un dissipateur thermique (23) disposé dans la région du puits (15), qui est adjacent à l'espace intérieur (16) de la conduite de fluide (3).

22. Conduite de fluide selon la revendication 21, **caractérisée en ce que** le dissipateur thermique (23) forme une section de la conduite de fluide (3) entourant l'espace intérieur (16) de la conduite de fluide (3).

23. Conduite de fluide selon les revendications 21 et 22, **caractérisée en ce que** le dissipateur thermique (23) est disposé de manière à pouvoir être logé dans le puits (15) .

24. Conduite de fluide (3) selon l'une quelconque des revendications 16 à 23, **caractérisée en ce que** l'espace intérieur (16) de la conduite de fluide (3) présente dans la direction d'ouverture du puits (15) au moins partiellement une surface de délimitation (18) sensiblement plane.

25. Ensemble, comprenant un dispositif de chauffage (2) et une conduite de fluide (3), **caractérisé en ce que** la conduite de fluide (3) est formée selon l'une quelconque des revendications 14 à 22.

26. Module de chauffage (1), en particulier pour le dégazage d'une carter de vilebrequin d'un moteur à combustion interne, avec une conduite de fluide (3), un élément de chauffage (4) et un dispositif de fixation (5), dans lequel l'élément de chauffage (4) est fixé par le dispositif de fixation (5) de manière à transmettre la chaleur à la conduite de fluide (3) et la conduite de fluide (3) comporte un puits (15) s'ouvrant vers l'extérieur en direction radiale, **caractérisé en ce qu'**un dispositif de chauffage selon l'une quelconque des revendications 1 à 15 est placé dans une conduite de fluide selon l'une quelconque des revendications 16 à 25.

27. Module de chauffage selon la revendication 26, **caractérisé en ce qu'**un dissipateur thermique (23) est prévu dans la région du puits (15), qui est adjacent à l'espace intérieur (16) de la conduite de fluide (3).

28. Module de chauffage (1) selon la revendication 27, **caractérisé en ce que** le dissipateur thermique (23) est disposé en tant qu'une pièce de conduite (23) insérée dans le puits (15).

29. Module de chauffage (1) selon l'une quelconque des revendications 26 à 28, **caractérisé en ce que** le dispositif de fixation (5) est lié à la conduite de fluide (3) en formant une butée étanche.

30. Module de chauffage (1) selon la revendication 29, **caractérisé en ce que** le dispositif de fixation (5) est soudé à la conduite de fluide (3).

31. Procédé de fabrication d'un module de chauffage (1), notamment pour le dégazage d'un carter de vilebrequin d'un moteur à combustion interne, comprenant les étapes suivantes :
- insertion de l'élément de chauffage dans un puits s'ouvrant vers l'extérieur radialement ;
- insertion de l'élément de chauffage (4) dans la conduite de fluide (3) de manière que les deux se touchent ;
- apport d'un dispositif de fixation au puits pour la fixation de l'élément de chauffage.

32. Procédé selon la revendication 31, comprenant l'étape suivante :
- montage à l'avance de l'élément de chauffage et du dispositif de fixation en une unité modulaire.

33. Procédé selon la revendication 31 et 32, comprenant l'étape suivante :
- soudage du dispositif de fixation et de la conduite de fluide.
